# FASCICULE DE BREVET EUROPEEN

(11) **EP 1 612 072 B1**
(45) Date de publication et mention de la délivrance du brevet: **10.11.2010**
(21) Numéro de dépôt: 05105771.9
(22) Date de dépôt: 28.06.2005
(51) Int. Cl.: B60J 5/04

(54) **Porte de véhicule automobile, ensemble de structure, ensemble vitré, procédé de fabrication et véhicule correspondants**
Fahrzeugtür, Konstruktionsaufbau, Scheibeneinheit, Verfahren zum Herstellen und korrespondierende Fahrzeuge
Motor vehicle door, structural assembly, glazed unit, method to manufacture and corresponding vehicles

(30) Priorité: 29.06.2004 FR 0407176
(43) Date de publication de la demande: 04.01.2006
(73) Titulaire: Wagon SAS, 79302 Bressuire Cédex (FR)
(72) Inventeur: Moreau, Stéphane, 79700 Le Temple (FR); Seiller, Julien, 79300 Bressuire (FR)
(74) Mandataire: Bioret, Ludovic

(56) Documents cités:
- EP-A1- 0 437 188
- EP-A1- 0 778 168
- EP-A1- 0 857 844
- EP-A2- 0 347 537
- FR-A1- 2 724 601

## Description

Le domaine de l'invention est celui des baies ménagées dans les portes de véhicule. Plus précisément, l'invention concerne les dispositifs d'obturation d'une baie ménagée dans une porte d'un véhicule automobile et comprenant une partie mobile par exemple selon une direction essentiellement verticale, susceptible de fermer ou de libérer une ouverture.

L'invention s'applique en particulier, mais non exclusivement, aux portes latérales des véhicules automobiles. Elle peut s'appliquer également, par exemple, aux portes battantes et coulissantes de véhicules, y compris les portes arrière, hayons, ...

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la vitre, avec une garniture d'étanchéité.

La technique le plus couramment répandue pour l'ouverture et la fermeture des vitres est de rendre celle-ci mobile verticalement dans son propre plan, en la faisant pénétrer ou sortir du caisson ou de la garniture des portes latérales.

Cette technique est aujourd'hui couramment utilisée et des solutions pour l'automatiser sont connues. L'équipement des automobiles en vitres électriques est aujourd'hui très répandu.

Parallèlement, une autre technique a été proposée par le Titulaire de la présente demande de brevet. Les principes de base de cette technique sont notamment décrits dans les documents de brevet EP-0 778 168 et EP - 0 857 844.

Grâce à cette technique, on produit des « baies flush » qui présentent, sur le plan esthétique, vue de l'extérieur, un aspect lisse, affleurant du fait qu'aucun cadre n'est nécessaire.

Les « baies flush » comprennent un ensemble fixe et une partie mobile, l'ensemble fixe étant destiné à être monté dans le logement défini à cet effet sur la carrosserie du véhicule.

Or, les baies ménagées dans les portes ont des dimensions relativement limitées qu'il n'est donc généralement pas opportun de réduire davantage en rapportant un ensemble fixe selon la technique antérieure.

Pourtant, il est souhaitable de pouvoir équiper certains véhicules, par exemple des véhicules luxueux ou des monospaces, de baies affleurantes.

L'invention a notamment pour objectif de pallier ces inconvénients de l'art antérieur.

Plus précisément, un objectif de l'invention est de fournir des portes de véhicule présentant un aspect affleurant en elle même et avec les carrosseries, tout en présentant une ouverture importante de la surface vitrée.

L'invention a également pour objectif de fournir une telle porte de véhicule qui présente une bonne qualité de structure et d'étanchéité.

L'invention a également pour objectif de fournir de telles portes qui présentent des caractéristiques nouvelles, notamment en ce qui concerne l'esthétique et l'ergonomie.

Un autre objectif de l'invention est de fournir une telle porte qui soit simple et facile à mettre en oeuvre. Notamment, un objectif de l'invention est de fournir une telle porte que les constructeurs puissent assembler, régler et monter sur le véhicule de façon efficace et rapide.

Ces objectifs, ainsi que d'autres qui apparaîtront plus clairement par la suite, sont atteints à l'aide d'une porte de véhicule automobile du type de celle définie dans le préambule de la revendication 1. Un exemple de porte de ce type est par exemple décrit dans le document EP-0 437 188.

Selon l'invention, ledit ensemble formant structure présente un premier cadre et ledit ensemble vitré présente un second cadre, ledit premier cadre et ledit second cadre étant superposés, ledit second cadre comprenant des moyens de guidage en coulissement d'un panneau vitré mobile entre une position fermée et au moins une position ouverte et venant en appui, en position fermée, contre ledit second cadre, de façon que ce dernier se trouve entre ledit premier cadre et ledit panneau vitré mobile.

On réalise ainsi de façon simple et efficace une porte de véhicule à vitre coulissante, présentant un aspect affleurant.

De façon avantageuse, ledit ensemble vitré présente au moins un prolongement destiné à pénétrer à l'intérieur dudit ensemble formant structure.

Ce prolongement participe ainsi à la fixation de l'ensemble vitré dans l'ensemble formant structure, et peut participer au guidage et au maintien du panneau mobile.

Préférentiellement, ledit ensemble vitré comprend deux prolongements, s'étendant respectivement dans le prolongement de deux montants dudit second cadre.

Selon un mode de réalisation avantageux, lesdits moyens de guidage comprennent des moyens de louvoiement, éloignant ledit panneau vitré dudit second cadre avant son coulissement, et plaquant ledit panneau vitré contre ledit second cadre en position fermée.

En d'autres termes, le panneau vitré est plaqué contre le second cadre en position fermée, mais en est séparé dès qu'il est en mouvement. Ceci présente notamment l'avantage d'éviter les frottements.

De façon préférentielle, ledit ensemble vitré porte des moyens de motorisation dudit panneau vitré.

Selon un mode de réalisation particulier de l'invention, lesdits moyens de motorisation sont montés sur une traverse reliant lesdits prolongements.

Préférentiellement, lesdits moyens de motorisation agissent sur des patins de coulissement solidaires dudit panneau vitré.

Selon une approche préférentielle de l'invention, ledit second cadre est monobloc.

De façon avantageuse, ledit second cadre est réalisé en plastique.

De façon préférentielle, ledit second cadre intègre au moins une des parties des moyens d'entraînement et de guidage dudit panneau vitré et/ou au moins une partie de moyens de réception d'un joint d'étanchéité.

On obtient ainsi une intégration multifonction, qui permet de supprimer des pièces et de simplifier l'assemblage.

Selon un autre mode de mise en oeuvre de l'invention, ledit second cadre est réalisé en au moins deux parties soudées entre elles.

De façon avantageuse, ledit second cadre comprend deux montants et une traverse supérieure, destinée à être assemblée auxdits montants après assemblage dudit ensemble formant structure et dudit ensemble vitré.

Préférentiellement, lesdits premier et second cadres sont assemblés à l'aide de moyens de fixation en matière plastique.

De telles fixations permettent d'éviter les problèmes d'effet de pile.

Selon un mode de réalisation avantageux, la porte comprend des moyens de rattrapage de jeu entre lesdits premier et second cadres et/ou de réglage de position dudit second cadre.

Ainsi, il est possible d'obtenir un aspect affleurant parfaitement ajusté.

Selon une caractéristique particulière de l'invention, ledit ensemble vitré porte au moins un enjoliveur de pied milieu et/ou de rétroviseur, affleurant avec ledit panneau vitré en position fermé.

L'invention concerne également les ensembles formant structure et les ensembles vitrés pour une porte de véhicule automobile telle que décrite ci-dessus.

L'invention concerne encore un procédé de fabrication d'une telle porte de véhicule automobile. Un tel procédé comprend une étape d'assemblage de façon à superposer ledit premier cadre et ledit second cadre, ledit second cadre comprenant des moyens de guidage en coulissement d'un panneau vitré mobile entre une position fermée et au moins une position ouverte et venant en appui, en position fermée, contre ledit second cadre, de façon que ce dernier se trouve entre ledit premier cadre et ledit panneau vitré mobile.

Selon une approche particulière, le procédé de fabrication selon l'invention comprend plus précisément les étapes suivantes :
- réalisation dudit ensemble formant structure, présentant une ouverture pour recevoir ledit ensemble vitré ;
- réalisation dudit ensemble vitré, présentant au moins un prolongement destiné à pénétrer à l'intérieur dudit ensemble formant structure ;
- introduction desdits prolongements dans ladite ouverture, jusqu'à une butée ;
- solidarisation desdits premier et second cadres.

Selon un mode de réalisation particulier, l'étape de solidarisation comprend au moins une des étapes suivantes :
- collage;
- clippage plastique.

L'invention concerne également un véhicule automobile comprenant au moins une porte selon les caractéristiques décrites ci-dessus.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue de l'ensemble formant la structure d'une porte de véhicule selon l'invention ;
- la figure 2 présente une section schématique de la vue de la figure 1 ;
- la figure 3 est une vue de l'ensemble vitré ;
- la figure 4 présente l'assemblage de l'ensemble vitré avec l'ensemble formant structure ;
- les figures 5A, 5B et 5C présentent, en coupe, une vue schématique de cet assemblage :

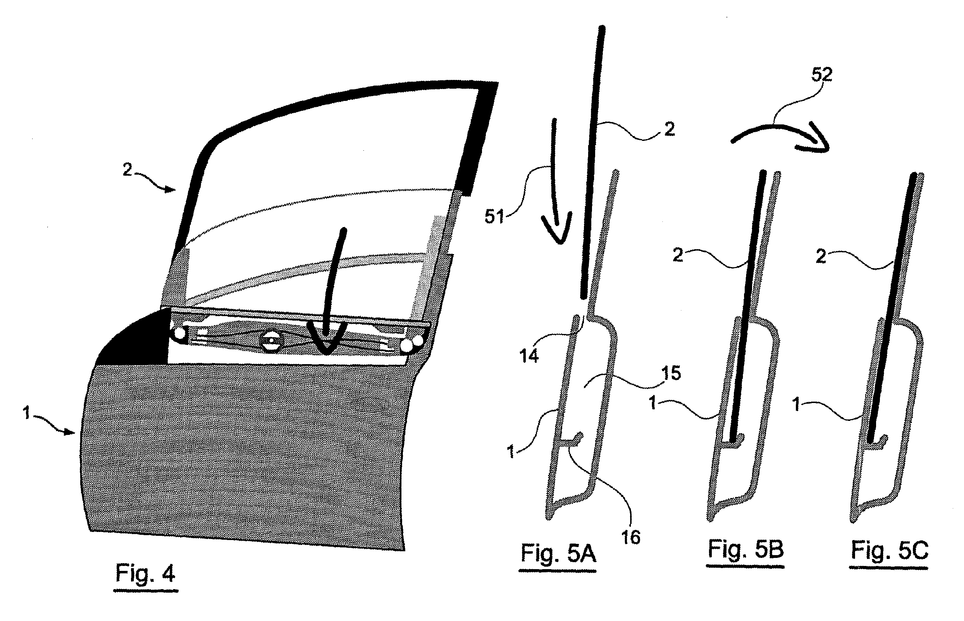

   - figure 5A : position correspondant à celle de la figure 4 ;
   - figure 5B : les deux ensembles sont appliqués l'un contre l'autre ;
   - figure 5C : les deux ensembles sont dans leur position définitive et peuvent être fixés ;

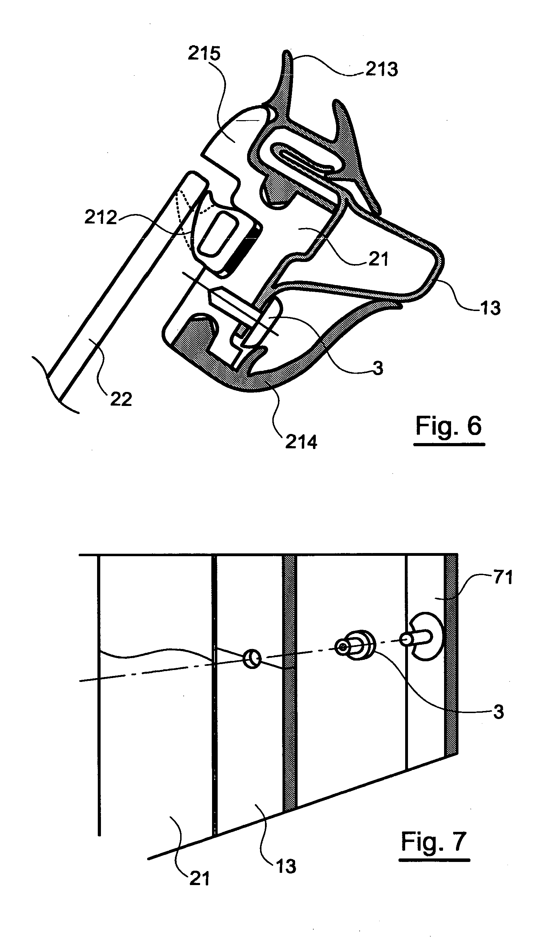

- la figure 6 illustre, en vue de section, le cadre de la porte, permettant de voir le cadre de la structure et le cadre de l'ensemble vitré assemblés ;
- La figure 7 présente un mode de fixation du cadre de la structure et du cadre de l'ensemble vitré ;

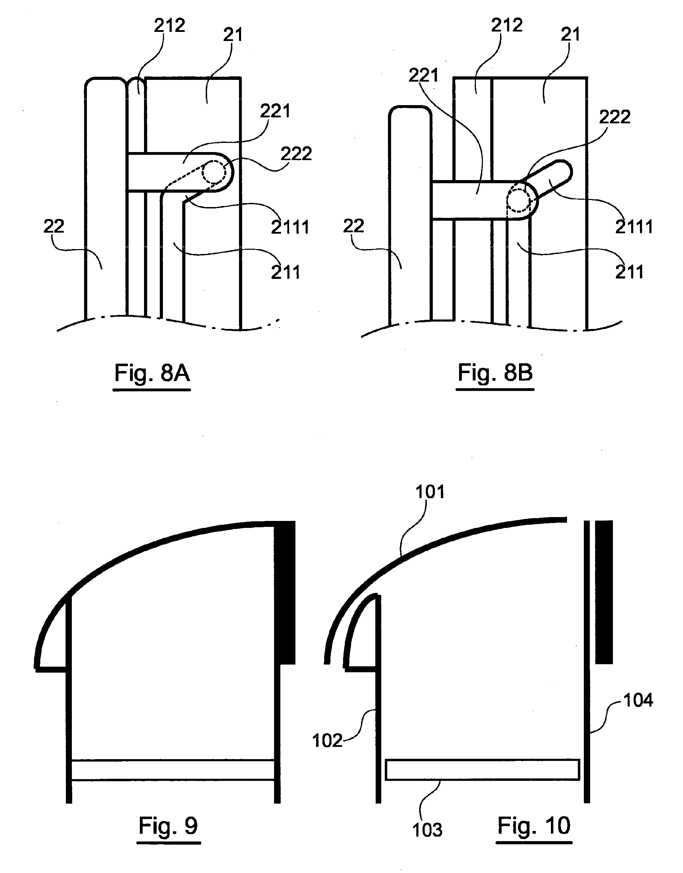

- les figures 8A et 8B présentent schématiquement un montant du cadre de l'ensemble vitré, avec le dispositif de guidage du panneau vitré mobile:
   - figure 8A : le panneau vitré étant fermé ;
   - figure 8B : le panneau vitré ayant commencé le mouvement d'ouverture par un louvoiement ;
- la figure 9 illustre schématiquement un ensemble vitré monobloc ;
- la figure 10 illustre schématiquement un ensemble vitré réalisé en plusieurs parties destinées à être soudées entre elles ;

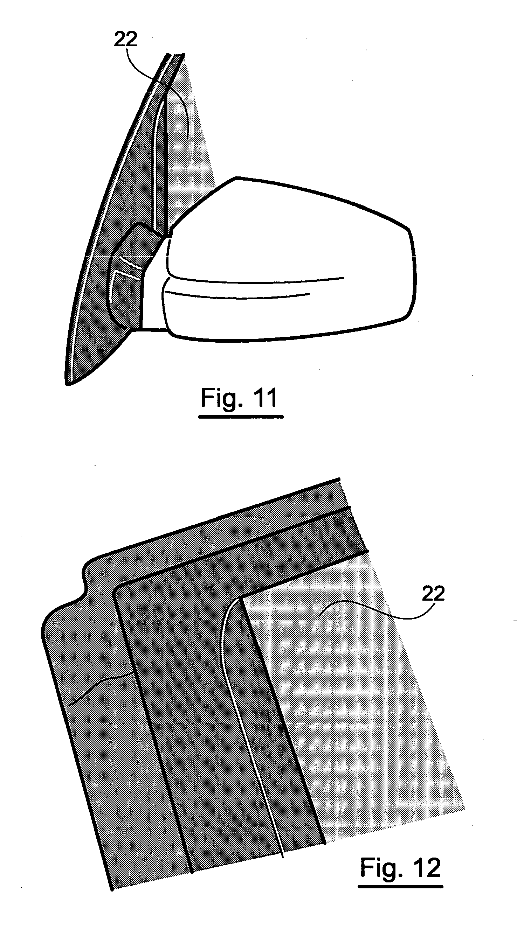

- la figure 11 présente un rétroviseur de côté de véhicule automobile et son enjoliveur, selon l'invention ;
- la figure 12 présente le coin supérieur d'une porte d'automobile selon l'invention ;

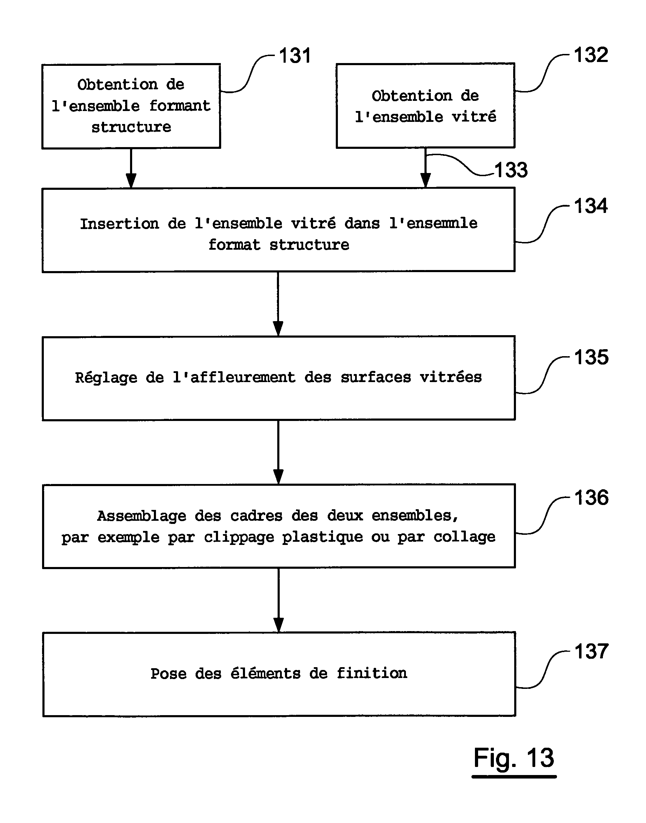

- la figure 13 présente sous forme de diagramme les différentes étapes du procédé de réalisation d'une porte de véhicule automobile selon l'invention.

L'invention présente donc une nouvelle technique permettant de réaliser des portes de véhicule automobile présentant un aspect affleurant (« flush » en anglais). Selon l'invention, il est possible de réaliser une porte (porte latérale, porte arrière, hayon, porte de cabine...) dont la vitre, ou panneau mobile, est parfaitement alignée et affleurante avec la carrosserie (caisson inférieur de la porte), sans même un joint d'étanchéité apparaissant entre le caisson et le panneau vitré, en position fermée. Selon cette technique, la porte peut présenter un cadre de porte embouti avec la doublure.

Par la suite, on décrit une porte latérale, dont la vitre coulisse verticalement à l'intérieur du caisson. Bien entendu, il est possible d'adapter cette technique à d'autres portes, et de faire coulisser le panneau horizontalement, ou plus généralement selon une direction quelconque. Il peut également y avoir plusieurs panneaux vitrés distincts, dont certains peuvent être fixes.

Une porte de véhicule selon l'invention comprend donc :
- un ensemble formant structure, par exemple en tôle, correspondant au caisson de porte et présentant un premier cadre ;
- un ensemble vitré présentant un second cadre configuré de façon à offrir un aspect affleurant (« flush » en anglais).

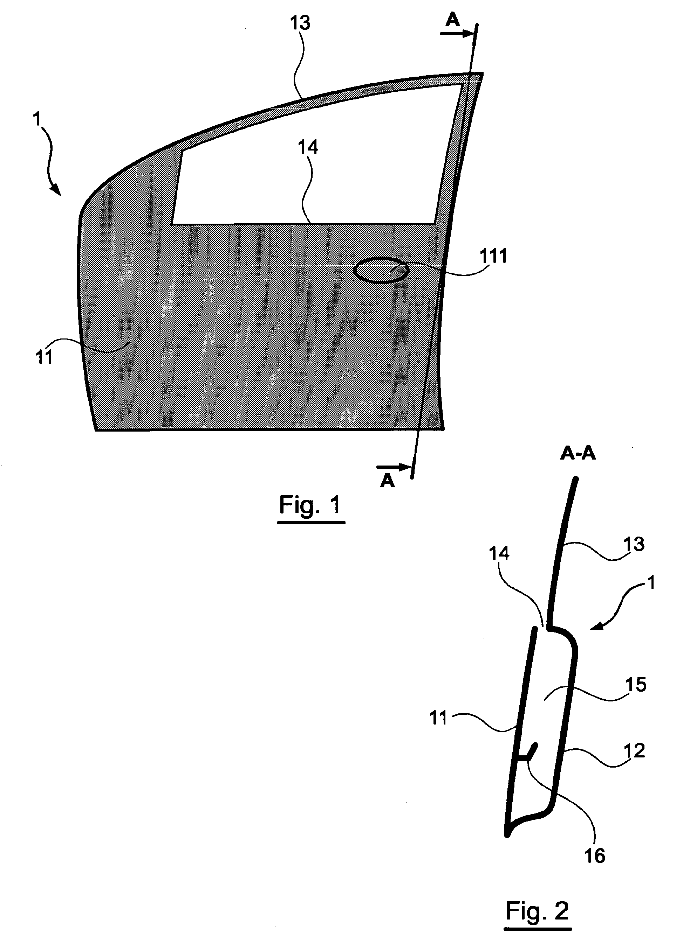

La figure 1 est une vue simplifiée de l'ensemble formant structure 1 d'une porte de véhicule automobile. La figure 2 est une vue d'une section de la figure 1, au niveau du montant le plus élevé.

Cette structure de porte comprend, classiquement, un panneau extérieur 11, qui est partie intégrante de la carrosserie du véhicule, et une doublure 12, ou habillage. La structure comprend également, dans le prolongement de la doublure 12, un premier cadre 13, qui défmit le contour supérieur de la porte.

Classiquement, une poignée 111 est prévue sur le panneau extérieur et sur la doublure pour actionner le système d'ouverture de la porte, non représenté sur ces figures. Une fente 14 est prévue entre le haut de la doublure 12 et le haut du panneau extérieur 11, le long d'une grande partie de la structure 1. Cette fente 14 permet le passage d'une vitre mobile dans l'espace intérieur 15 de la structure, situé entre le panneau extérieur 11 et la doublure 12 de la structure 1. Cette structure de porte comprend également, classiquement, des systèmes de renfort contre les chocs fronteaux ou latéraux, qui ne sont pas représentés ici.

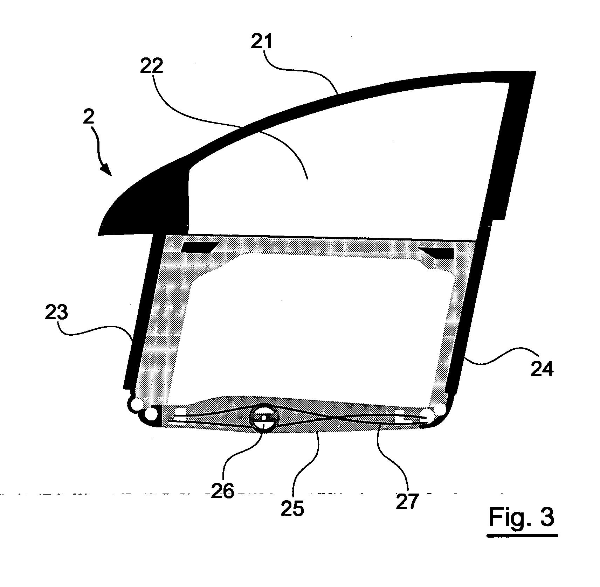

La figure 3 représente l'ensemble vitré 2 destinée à être assemblé avec la structure 1 pour former la porte du véhicule. Cet ensemble 2 comprend un deuxième cadre 21 qui présente sensiblement la même forme que le premier cadre 13 de la structure 1.

Un panneau vitré mobile 22 recouvre, en position fermé, l'espace défini par le cadre 21 et recouvre également au moins une portion du cadre 21 lui-même, permettant ainsi l'obtention d'une surface vitrée affleurante, vue de l'extérieur.

Dans le prolongement des deux montants du cadre 21, s'étendent deux prolongements 23 et 24. Ces prolongements sont destinés à guider et maintenir le panneau vitré mobile 22 dans ses déplacements entre les positions ouvertes et fermées, et participent à la solidarisation des deux ensembles.

Le bas de ces deux prolongements peuvent être reliés par une traverse 25. Cette traverse 25 peut supporter un moteur 26 pour l'actionnement du panneau vitré mobile.

Les figures 11 et 12 présentent respectivement un rétroviseur de coté et le coin supérieur d'une porte d'automobile. Comme on peut le voir sur ces figures, le panneau vitré peut remplacer ou intégrer les enjoliveurs de pied milieu et d'embase de rétroviseur. L'ensemble vitré 2 peut également comprendre un ou plusieurs panneau(x) vitré(s) fixe(s), ou custode(s). Enfin, il peut intégrer les joints d'étanchéité de cadre et de porte.

Ainsi, l'ensemble supérieur est un ensemble complet, fourni par un fabricant au constructeur sous une forme « prêt à monter », déjà équipé de ses accessoires, de son moteur... Ces différents éléments ont pu être préalablement ajustés, réglés et testés.

La figure 4 et les figures 5A, 5B et 5C représentent le montage des deux éléments constituant une porte de véhicule automobile selon l'invention. On y voit la structure 1 et l'ensemble vitré 2, dont le panneau vitré mobile est ici représenté en position ouverte. Lors du montage, comme on le voit sur les figures 4 et 5a, les prolongements 23 et 24 de l'ensemble vitré 2 sont introduits (51) dans l'espace intérieur 15 par la fente 14 de la structure 1.

Puis, comme représenté sur la figure 5b, une légère rotation 52 permet de plaquer d'une part les prolongements 23 et 24 de l'ensemble vitré 2 contre l'intérieur du panneau 1, et d'autre part le deuxième cadre 21 de l'ensemble vitré 2 contre le premier cadre 13 de l'ensemble formant structure 1.

Ces deux cadres ayant essentiellement la même forme, ils se recouvrent l'un l'autre parfaitement. Ceci est illustré par la figure 6, qui présente une section partielle de ces cadres 13 et 21 fixés l'un à l'autre. Ces cadres sont assemblés, par exemple, par des moyens de clippage plastique 3, pour éviter les problèmes d'effet de pile.

Ce clippage plastique 3 est également représenté sur la figure 7. Les agrafes de clippage plastique peuvent être recouvertes par une barrette plastique 71 formant enjoliveur.

La fixation peut inclure un rattrapage de jeu, non représenté sur les figures, pour éviter le bruit entre le premier cadre 13 de l'ensemble formant structure 1 et le deuxième cadre 21 de l'ensemble vitré 2. De plus, un système de réglage, non représenté sur les figures, peut être intégré pour l'ajustement de l'affleurement et des jeux du cadre par rapport aux éléments environnants.

Selon un autre mode de réalisation, les deux cadres 13 et 21 peuvent également être assemblés par collage par colle ou par ruban adhésif double face.

Le panneau vitré mobile 22, en position fermée, vient en appui contre le deuxième cadre 21 de l'ensemble vitré 2, qui lui-même recouvre sensiblement le premier cadre 13 de la structure 1. Une partie 215 du cadre peut former enjoliveur entre le panneau vitré et la carrosserie. Dans ce cas, cette partie est affleurante avec ce panneau vitré (en position fermée) et la carrosserie.

Comme il est représenté sur la figure 6, le deuxième cadre 21 peut également inclure plusieurs joints d'étanchéité. Le joint d'étanchéité de vitre 212 est fixé dans une rainure du cadre 21 de manière à se trouver dissimulé en dessous du panneau vitré 22 quand celui-ci est fermé. Ce joint est alors comprimé entre le deuxième cadre 21 et le panneau vitré 22, ce qui assure une bonne étanchéité. Un joint de double étanchéité de porte 213 peut également être fixé au deuxième cadre 21. Ce cadre peut également servir de support à une garniture intérieure du véhicule 214.

Les figures 8A et 8B présentent schématiquement le haut d'un montant du cadre de l'ensemble vitré.

Sur la figure 8A on peut voir le panneau vitré 22 fermé, le deuxième cadre 21 et le joint d'étanchéité de vitre 212 comprimé entre le deuxième cadre 21 et le panneau vitré 22 pour assurer une bonne étanchéité. On voit également sur cette figure une patte 221 solidaire du panneau vitré 22, et qui porte un patin 222. Ce patin 22 est conçu pour coulisser le long d'une rainure 211 qui est intégrée dans le cadre 21.

Sur la figure 8B on voit que le panneau vitré 22 commence son mouvement d'ouverture, sous l'effet d'une traction vers le bas due par exemple au système motorisé d'actionnement du panneau vitré. Le patin 222, en glissant le long de la rainure 211 et particulièrement de sa zone de louvoiement 2111, donne au panneau vitré 22 un mouvement de louvoiement qui a pour effet de l'éloigner du joint d'étanchéité de vitre 212, qui n'est plus alors comprimé. Le panneau vitré peut alors poursuivre son mouvement vers le bas sans frottement avec le joint d'étanchéité de vitre 212, ce qui permet d'éviter l'usure prématurée de ce joint. Ce mouvement se fait sensiblement verticalement, suivant juste une courbe correspondant au galbe du panneau vitré 22. Le panneau vitré 22 peut alors descendre jusqu'à une position définie par une butée.

Lors de la fermeture du panneau vitré mobile 22, le mouvement est inverse : le panneau vitré est pousse par le système de motorisation, le patin 222 coulisse quasiment verticalement, selon le galbe du panneau vitré 22, le long de la rainure 211, jusqu'à arriver dans la zone de louvoiement 2111. A ce moment, guidée par le patin 222, le panneau vitré mobile 22 vient écraser le joint d'étanchéité de vitre 212 contre le cadre 21, ce qui assure la bonne étanchéité de la porte et le verrouillage de la vitre (inviolabilité). Ce mouvement s'arrête sur une butée mécanique.

La motorisation de l'actionnement de ce déplacement du panneau vitré 22 peut se faire de plusieurs façons.

Un mode de réalisation peut être composé d'un motoréducteur et d'un rail fixé au caisson permettant le guidage du système d'entraînement (câble bidirectionnel « push-pull » par exemple). Dans ce cas, le système de câbles est relié directement sur la partie basse de la vitre, idéalement en son centre.

Un autre mode de réalisation peut être composé d'un motoréducteur et d'un système d'entraînement (câble push-pull par exemple) relié aux patins de coulissement dans chacun des 2 montants du cadre. Cette solution est avantageuse car elle supprime le rail central et permet un montage plus aisé du cadre dans le caisson : le cadre étant prééquipé de la motorisation, l'ensemble est « enfilé » entre le panneau extérieur et la doublure du caisson.

La motorisation peut être commandée électroniquement pour gérer par exemple des impulsions, des vitesses de transfert variables ou un anti-pincement. Bien sûr, l'actionnement de ce panneau vitré mobile peut également être conçu pour être actionné manuellement sans que le principe général de fermeture et d'ouverture du panneau vitré mobile 22 soit nécessairement modifié.

Comme on le voit, dans la porte, le maintien du panneau vitré mobile 22 et son guidage entre sa position ouverte et sa position fermée sont entièrement assurés par l'ensemble vitré 2. Cet ensemble n'a par contre pas à assurer la rigidité du cadre, qui est entièrement assuré par l'ensemble formant structure 1.

Cela laisse donc plusieurs possibilités pour fabriquer le cadre 21. En effet il peut être soit monobloc (par exemple en plastique), comme illustré schématiquement par la figure 9, et assurer directement les fonctions de rails de coulissement, de gorges de maintien de l'étanchéité, des rampes de louvoiement, soit en plusieurs parties, comme illustré schématiquement par la figure 10, avec liaisons soudées (par exemple en acier). Il y a dans ce cas deux configurations possibles :
- réalisation d'un cadre avec le montant avant 102, le montant arrière 104, la fermeture supérieure 101 et la traverse motorisée 103 ;
- réalisation d'un cadre en U avec le montant avant 102, le montant arrière 104 et la traverse motorisée 103, la fermeture de cadre 101 étant livrée séparément chez le constructeur pour être assemblée directement sur le haut du cadre de porte (fixation par sertissage, clinchage ou soudage).

La figure 13 reprend sous forme de diagramme les différentes opérations de la fabrication d'une porte de véhicule automobile selon l'invention.

On y trouve une opération 131 d'obtention de l'ensemble formant structure 1. Cet ensemble peut être fabriqué par exemple en tôle, et il inclut une structure de porte équipée, notamment, d'un panneau extérieur 11, d'une doublure intérieure 12 avec cadre structure adapté à la présente invention (aménagement pour fixation), des différents renforts (chocs frontaux, latéraux), et des systèmes de fermeture (gâche, tirant, ...). Cette opération inclut également la mise en peinture de l'ensemble formant structure 1.

Une autre opération 132 d'obtention de l'ensemble vitré peut être faite complètement indépendamment de l'opération 131 décrite ci-dessus. En particulier, cette opération peut être faite par un fabricant indépendant, sur un autre site.

Cette opération vise à obtenir un ensemble vitré 2 composé d'un cadre 21, qui peut être soi monobloc, par exemple en plastique, soit composé de plusieurs éléments assemblés par soudage, par exemple en acier. Ce cadre est notamment équipé d'une (ou plusieurs) vitre(s) mobile(s) 22, éventuellement d'une ou de plusieurs vitre(s) fixe(s) (custode(s)), des joints d'étanchéité de cadre et de porte, des rainures 211, qui peuvent être rapportées ou issues du cadre, des patins de coulissement, et d'un système d'entraînement manuel ou motorisé.

Une fois cet ensemble vitré 2 pré-assemblé, le fabricant peut le livrer (133) « prêt à monter » au constructeur qui fera l'assemblage final.

Dans un mode particulier de réalisation, le fabricant peut également livrer séparément au constructeur la fermeture du cadre 102, qui sera assemblé par le constructeur sur le haut du cadre de la porte après l'assemblage des ensembles 1 et 2.

Pour l'assemblage final, l'ensemble vitré 2 est inséré dans l'ensemble formant structure 1, entre le panneau extérieur 11 et la doublure 12. On notera que cette opération peut être effectuée alors que l'ensemble formant structure a déjà été peint.

A ce niveau, une opération de réglage 135 peut être intégrée pour l'ajustement de l'affleurement et des jeux du cadre second 21 par rapport aux éléments environnant (ex : par rapport aux deux portes)

Le second cadre 21 est solidarisé au premier cadre 13 de l'ensemble structure 1. Cette solidarisation se fait par exemple par clippage plastique (pour éviter les problèmes d'effet pile) avec rattrapage de jeu (pour éviter le bruit entre le premier cadre structure 13 et le second cadre vitré 21). Ce clippage plastique peut se faire par des clips indépendants ou intégrés à l'un des cadres.

On peut envisager des collages par double face ou colles en interface entre les composants et entre le second cadre vitré 21 et le premier cadre 13 pour avoir un assemblage compact.

Une dernière étape 137 de pose des éléments de finition peut intervenir alors pour terminer la fabrication de la porte. On dispose alors d'une porte pouvant être montée directement sur le véhicule.

Il apparaît clairement que la nouvelle technique de l'invention présente de nombreux avantages :
- obtention d'une surface vitrée totale et affleurante avec les vitrages environnant et la carrosserie, ce qui permet de définir de nouveaux styles pour les véhicules, ajustement possible de cet affleurement ;
- simplification de l'assemblage, par le pré-assemblage de la l'ensemble, qu'il n'y a plus qu'à insérer dans le caisson (même les tests et les réglages peuvent être réalisés au préalable) ;
- suppression et simplification de pièce par l'intégration multifonctions. Par exemple, suppression des enjoliveurs de pied milieu et d'embase de rétroviseur, simplification des joints d'étanchéité ;
- simplification de la maintenance, puisqu'il n'est pas nécessaire de retirer les joints lors du démontage du panneau mobile, et qu'il est possible de changer l'ensemble vitré sous la forme d'un ensemble (vitre + cadre) ;
- réduction de l'usure des joints, qui ne sont pas en contact ave le panneau mobile lors de son coulissement.
- Amélioration du coefficient de traînée (CX), ce qui entraîne une diminution de la consommation de carburant du véhicule.

De nombreux ajouts ou variantes au mode de réalisation décrit plus haut peuvent bien sûr être envisagés.

## Revendications

1. Porte de véhicule automobile, comprenant un ensemble formant structure (1) et un ensemble vitré (2) assemblés l'un à l'autre,
**caractérisée en ce que** ledit ensemble formant structure (1) présente un premier cadre (13) et **en ce que** ledit ensemble vitré (2) présente un second cadre (21), ledit premier cadre (13) et ledit second cadre (21) étant superposés,
ledit second cadre (21) comprenant des moyens de guidage en coulissement d'un panneau vitré mobile (22) entre une position fermée et au moins une position ouverte et venant en appui, en position fermée, contre ledit second cadre (21), de façon que ce dernier se trouve entre ledit premier cadre (13) et ledit panneau vitré mobile (22).

2. Porte de véhicule automobile selon la revendication 1, **caractérisée en ce que** ledit ensemble vitré (2) présente au moins un prolongement destiné à pénétrer à l'intérieur dudit ensemble formant structure (1).

3. Porte de véhicule automobile selon la revendication 2, **caractérisée en ce que** ledit ensemble vitré (2) comprend deux prolongements, s'étendant respectivement dans le prolongement de deux montants dudit second cadre (21).

4. Porte de véhicule automobile selon l'une quelconque des revendications 1 à 3, **caractérisée en ce que** lesdits moyens de guidage comprennent des moyens de louvoiement, éloignant ledit panneau vitré (22) dudit second cadre (21) avant son coulissement, et plaquant ledit panneau vitré (22) contre ledit second cadre (21) en position fermée.

5. Porte de véhicule automobile selon l'une quelconque des revendications 1 à 4, **caractérisée en ce que** ledit ensemble vitré (2) porte des moyens de motorisation dudit panneau vitré (22).

6. Porte de véhicule automobile selon les revendications 3 et 5, **caractérisée en ce que** lesdits moyens de motorisation sont montés sur une traverse reliant lesdits prolongements.

7. Porte de véhicule automobile selon l'une quelconque des revendications 5 et 6, **caractérisée en ce que** lesdits moyens de motorisation agissent sur des patins de coulissement solidaires dudit panneau vitré (22).

8. Porte de véhicule automobile selon l'une quelconque des revendications 1 à 7, **caractérisée en ce que** ledit second cadre (21) est monobloc.

9. Porte de véhicule automobile selon l'une quelconque des revendications 1 à 8, **caractérisée en ce que** ledit second cadre (21) est réalisé en plastique.

10. Porte de véhicule automobile selon l'une quelconque des revendications 8 et 9, **caractérisée en ce que** ledit second cadre (21) intègre au moins une des parties des moyens d'entraînement et de guidage dudit panneau vitré (22) et/ou au moins une partie de moyens de réception d'un joint d'étanchéité.

11. Porte de véhicule automobile selon l'une quelconque des revendications 1 à 7, **caractérisée en ce que** ledit second cadre (21) est réalisé en au moins deux parties soudées entre elles.

12. Porte de véhicule automobile selon la revendication 11, **caractérisée en ce que** ledit second cadre (21) comprend deux montants et une traverse supérieure, destinée à être assemblée auxdits montants après assemblage dudit ensemble formant structure (1) et dudit ensemble vitré (2).

13. Porte de véhicule automobile selon l'une quelconque des revendications 1 à 12, **caractérisée en ce que** lesdits premier et second cadres (21) sont assemblés à l'aide de moyens de fixation en matière plastique.

14. Porte de véhicule automobile selon l'une quelconque des revendications 1 à 13, **caractérisée en ce qu'**elle comprend des moyens de rattrapage de jeu entre lesdits premier et second cadres (21) et/ou de réglage de position dudit second cadre (21).

15. Porte de véhicule automobile selon l'une quelconque des revendications 1 à 14, **caractérisée en ce que** ledit ensemble vitré (2) porte au moins un enjoliveur de pied milieu et/ou de rétroviseur, affleurant avec ledit panneau vitré (22) en position fermé.

16. Ensemble formant structure (1) pour porte de véhicule automobile selon l'une quelconque des revendications 1 à 15 comprenant ledit ensemble formant structure (1) et un ensemble vitré (2) assemblés l'un à l'autre,
**caractérisé en ce qu'**il présente un premier cadre (13) destiné à être superposé avec un second cadre (21) dudit ensemble vitré (2) portant un panneau mobile,
ledit second cadre (21) comprenant des moyens de guidage en coulissement d'un panneau vitré mobile (22) entre une position fermée et au moins une position ouverte et venant en appui, en position fermée, contre ledit second cadre (21), de façon que ce dernier se trouve entre ledit premier cadre (13) et ledit panneau vitré mobile (22).

17. Ensemble vitré (2) pour porte de véhicule automobile selon l'une quelconque des revendications 1 à 15 comprenant un ensemble formant structure (1) et ledit ensemble vitré (2) assemblés l'un à l'autre,
**caractérisé en ce qu'**il présente un second cadre (21) destiné à être superposé avec un premier cadre (13) dudit ensemble formant structure (1) et **en ce qu'**il porte un panneau mobile,
ledit second cadre (21) comprenant des moyens de guidage en coulissement d'un panneau vitré mobile (22) entre une position fermée et au moins une position ouverte et venant en appui, en position fermée, contre ledit second cadre (21), de façon que ce dernier se trouve entre ledit premier cadre (13) et ledit panneau vitré mobile (22).

18. Procédé de fabrication d'une porte de véhicule automobile, comprenant un ensemble formant structure (1) et un ensemble vitré (2) assemblés l'un à l'autre,
**caractérisé en ce que** ledit ensemble formant structure (1) présente un premier cadre (13) et **en ce que** ledit ensemble vitré (2) présente un second cadre (21),
et **en ce qu'**il comprend une étape d'assemblage de façon à superposer ledit premier cadre (13) et ledit second cadre (21),
ledit second cadre (21) comprenant des moyens de guidage en coulissement d'un panneau vitré mobile (22) entre une position fermée et au moins une position ouverte et venant en appui, en position fermée, contre ledit second cadre (21), de façon que ce dernier se trouve entre ledit premier cadre (13) et ledit panneau vitré mobile (22).

19. Procédé de fabrication selon la revendication 18, **caractérisé en ce qu'**il comprend les étapes suivantes :
- réalisation dudit ensemble formant structure (1), présentant une ouverture pour recevoir ledit ensemble vitré (2) ;
- réalisation dudit ensemble vitré (2), présentant au moins un prolongement destiné à pénétrer à l'intérieur dudit ensemble formant structure (1) ;
- introduction desdits prolongements dans ladite ouverture, jusqu'à une butée ;
- solidarisation desdits premier et second cadres (21).

20. Procédé de fabrication selon la revendication 19, **caractérisé en ce que** ladite étape de solidarisation comprend au moins une des étapes suivantes :
- collage ;
- clippage plastique.

21. Véhicule automobile **caractérisé en ce qu'**il comprend au moins une porte selon l'une quelconque des revendications 1 à 15.

## Claims

1. Motor vehicle door, comprising an assembly which forms a structure (1) and a glazed assembly (2) which are joined together,
**characterised in that** the assembly which forms a structure (1) has a first frame (13) and **in that** the glazed assembly (2) has a second frame (21), the first frame (13) and the second frame (21) being superimposed,
the second frame (21) comprising means for slidingly guiding a movable glazed panel (22) between a closed position and at least one open position and moving into abutment, in the closed position, against the second frame (21), so that it is located between the first frame (13) and the movable glazed panel (22).

2. Motor vehicle door according to claim 1, **characterised in that** the glazed assembly (2) has at least one extension which is intended to extend inside the assembly which forms a structure (1).

3. Motor vehicle door according to claim 2, **characterised in that** the glazed assembly (2) comprises two extensions which extend in extension of two vertical members of the second frame (21), respectively.

4. Motor vehicle door according to any one of claims 1 to 3, **characterised in that** the guiding means comprise lateral movement means which move the glazed panel (22) away from the second frame (21) before it slides and which press the glazed panel (22) against the second frame (21) in the closed position.

5. Motor vehicle door according to any one of claims 1 to 4, **characterised in that** the glazed assembly (2) carries means for motorisation of the glazed panel (22).

6. Motor vehicle door according to claim 3 and claim 5, **characterised in that** the motorisation means are mounted on a cross-member which connects the extensions.

7. Motor vehicle door according to either claim 5 or claim 6, **characterised in that** the motorisation means act on sliding pads which are fixedly joined to the glazed panel (22).

8. Motor vehicle door according to any one of claims 1 to 7, **characterised in that** the second frame (21) is an integral unit.

9. Motor vehicle door according to any one of claims 1 to 8, **characterised in that** the second frame (21) is produced from plastics material.

10. Motor vehicle door according to either claim 8 or claim 9, **characterised in that** the second frame (21) incorporates at least one of the portions of the means for driving and guiding the glazed panel (22) and/or at least a portion of means for receiving a sealing joint.

11. Motor vehicle door according to any one of claims 1 to 7, **characterised in that** the second frame (21) is produced in at least two portions which are welded together.

12. Motor vehicle door according to claim 11, **characterised in that** the second frame (21) comprises two vertical members and an upper cross-member which is intended to be joined to the vertical members after the assembly which forms a structure (1) and the glazed assembly (2) have been assembled.

13. Motor vehicle door according to any one of claims 1 to 12, **characterised in that** the first and second frames (21) are assembled using fixing means of plastics material.

14. Motor vehicle door according to any one of claims 1 to 13, **characterised in that** the motor vehicle door comprises means for adjusting the clearance between the first and second frames (21) and/or adjusting the position of the second frame (21).

15. Motor vehicle door according to any one of claims 1 to 14, **characterised in that** the glazed assembly (2) carries at least one decorative cover for the pillar trim and/or wing mirror which is flush with the glazed panel (22) in the closed position.

16. Assembly which forms a structure (1) for a motor vehicle door according to any one of claims 1 to 15, comprising the assembly which forms a structure (1) and a glazed assembly (2) which are joined together,
**characterised in that** the assembly has a first frame (13) which is arranged to be superimposed with a second frame (21) of the glazed assembly (2) which carries a movable panel,
the second frame (21) comprising means for slidingly guiding a movable glazed panel (22) between a closed position and at least one open position and moving into abutment, in the closed position, against the second frame (21), so that it is located between the first frame (13) and the movable glazed panel (22).

17. Glazed assembly (2) for a motor vehicle door according to any one of claims 1 to 15, comprising an assembly which forms a structure (1) and the glazed assembly (2) which are joined together,
**characterised in that** the glazed assembly has a second frame (21) which is arranged to be superimposed with a first frame (13) of the assembly which forms a structure (1) and **in that** it carries a movable panel,
the second frame (21) comprising means for slidingly guiding a movable glazed panel (22) between a closed position and at least one open position and moving into abutment, in the closed position, against the second frame (21) so that it is located between the first frame (13) and the movable glazed panel (22).

18. Method for producing a motor vehicle door, comprising an assembly which forms a structure (1) and a glazed assembly (2) which are joined together,
**characterised in that** the assembly which forms a structure (1) has a first frame (13) and **in that** the glazed assembly (2) has a second frame (21),
and **in that** the method comprises an assembly step in order to superimpose the first frame (13) and the second frame (21), the second frame (21) comprising means for slidingly guiding a movable glazed panel (22) between a closed position and at least one open position and moving into abutment, in the closed position, against the second frame (21) so that it is located between the first frame (13) and the movable glazed panel (22).

19. Production method according to claim 18, **characterised in that** it comprises the following steps:
- producing the assembly which forms a structure (1), having an opening for receiving the glazed assembly (2);
- producing the glazed assembly (2) having at least one extension which is intended to extend inside the assembly which forms a structure (1);
- introducing the extensions into the opening, as far as a stop;
- fixedly joining the first and second frames (21) to each other.

20. Production method according to claim 19, **characterised in that** the fixing step comprises at least one of the following steps:
- adhesive-bonding;
- plastic clipping.

21. Motor vehicle, **characterised in that** it comprises at least one door according to any one of claims 1 to 15.

## Patentansprüche

1. Fahrzeugtür, die eine Gruppe (1), welche eine Struktur bildet, und eine verglaste Gruppe (2) umfasst, die baulich miteinander verbunden sind,
**dadurch gekennzeichnet, dass** die besagte eine Struktur bildende Gruppe (1) einen ersten Rahmen (13) aufweist und dass die besagte verglaste Gruppe (2) einen zweiten Rahmen (21) aufweist, wobei der besagte erste Rahmen (13) und der besagte zweite Rahmen (21) übereinander angeordnet sind,
wobei der besagte zweite Rahmen (21) über gleitende Führungsmittel für ein bewegliches verglastes Paneel (22) zwischen einer geschlossenen Position und mindestens einer offenen Position verfügt und wobei das verglaste Paneel in geschlossener Position sich gegen den besagten zweiten Rahmen (21) abstützt, so dass sich dieser zwischen dem besagten ersten Rahmen (13) und dem besagten beweglichen verlasten Paneel (22) befindet.

2. Fahrzeugtür nach Anspruch 1, **dadurch gekennzeichnet, dass** die besagte verglaste Gruppe (2) mindestens eine Verlängerung aufweist, die in die besagte, eine Struktur bildende Gruppe (1) eindringen soll.

3. Fahrzeugtür nach Anspruch 2, **dadurch gekennzeichnet, dass** die besagte verglaste Gruppe (2) zwei Verlängerungen aufweist, die sich jeweils in der Verlängerung von zwei Schenkeln des besagten zweiten Rahmens (21) erstrecken.

4. Fahrzeugtür nach einem der Ansprüche 1 bis 3, **dadurch gekennzeichnet, dass** die besagten Führungsmittel über Mittel zum Ausführen von seitlich ausweichenden Bewegungen verfügt, die das besagte verglaste Paneel (22) vom besagten zweiten Rahmen (21) vor dem Gleiten entfernen und das besagte verglaste Paneel (22) gegen den besagten zweiten Rahmen (21) in der geschlossenen Position drücken.

5. Fahrzeugtür nach einem der Ansprüche 1 bis 4, **dadurch gekennzeichnet, dass** die besagte verglaste Gruppe (2) Mittel zum motorisierten Antrieb des besagten verglasten Paneels (22) trägt.

6. Fahrzeugtür nach den Ansprüchen 3 und 5, **dadurch gekennzeichnet, dass** die besagten Mittel zum motorisierten Antrieb auf einer Querstrebe angebracht sind, welche die besagten Verlängerungen verbindet.

7. Fahrzeugtür nach einem der Ansprüche 5 oder 6, **dadurch gekennzeichnet, dass** die besagten Mittel zum motorisierten Antrieb auf Gleitkufen wirken, die mit dem besagten verglasten Paneel (22) verbunden sind.

8. Fahrzeugtür nach einem der Ansprüche 1 bis 7, **dadurch gekennzeichnet, dass** der besagte zweite Rahmen (21) aus einem Stück gefertigt ist.

9. Fahrzeugtür nach einem der Ansprüche 1 bis 8, **dadurch gekennzeichnet, dass** der besagte zweite Rahmen (21) aus Kunststoff gefertigt ist.

10. Fahrzeugtür nach einem der Ansprüche 8 oder 9, **dadurch gekennzeichnet, dass** der besagte zweite Rahmen (21) mindestens eines der Teile der Antriebs- und Führungsmittel des besagten verglasten Paneels (22) und/oder mindestens einen Teil der Mittel zum Aufnehmen einer Dichtung enthält.

11. Fahrzeugtür nach einem der Ansprüche 1 bis 7, **dadurch gekennzeichnet, dass** der besagte zweite Rahmen (21) aus mindestens zwei miteinander verschweißten Teilen gefertigt wird.

12. Fahrzeugtür nach Anspruch 11, **dadurch gekennzeichnet, dass** der besagte zweite Rahmen (21) zwei Streben und eine obere Querstrebe aufweist, die nach der Montage der besagten eine Struktur bildenden Gruppe (1) und der besagten verglasten Gruppe (2) mit den besagten Streben verbunden werden soll.

13. Fahrzeugtür nach einem der Ansprüche 1 bis 12, **dadurch gekennzeichnet, dass** die besagten erster und zweiter Rahmen (21) mit Hilfe von Verbindungsmitteln aus Kunststoff zusammengesetzt werden.

14. Fahrzeugtür nach einem der Ansprüche 1 bis 13, **dadurch gekennzeichnet, dass** sie über Mittel zum Ausgleichen des Spielraums zwischen den besagten ersten und zweiten Rahmen (21) und/oder zum Einstellen der Position des besagten zweiten Rahmens (21) verfügen.

15. Fahrzeugtür nach einem der Ansprüche 1 bis 14, **dadurch gekennzeichnet, dass** die besagte verglaste Gruppe (2) mindestens ein Fußmitte- und/oder Rückspiegelzierblende trägt, die in der geschlossenen Position bündig mit dem verglasten Paneel (22) abschließt.

16. Struktur bildende Gruppe (1) für Fahrzeugtüren nach einem der Ansprüche 1 bis 15, welche die besagte, eine Struktur bildende Gruppe (1) und eine verglaste Gruppe (2), die baulich miteinander verbunden sind, aufweist,
**dadurch gekennzeichnet, dass** sie einen ersten Rahmen (13) aufweist, der einem zweiten Rahmen (21) der besagten, ein bewegliches Paneel tragenden verglasten Gruppe (2) überlagert werden soll, wobei der besagte zweite Rahmen (21) über gleitende Führungsmittel eines beweglichen verglasten Paneels (22) zwischen einer geschlossenen Position und mindestens einer offenen Position verfügt und wobei das verglaste Paneel in geschlossener Position sich gegen den besagten zweiten Rahmen (21) abstützt, so dass sich dieser zwischen dem besagten ersten Rahmen (13) und dem besagten beweglichen verglasten Paneel (22) befindet.

17. Verglaste Gruppe (2) für Fahrzeugtüren nach einem der Ansprüche 1 bis 15, die eine Gruppe (1), welche eine Struktur bildet, und die besagte verglaste Gruppe (2) umfasst, die baulich miteinander verbunden sind,
**dadurch gekennzeichnet, dass** sie einen zweiten Rahmen (21) umfasst, der einem ersten Rahmen (13) der besagten, eine Struktur bildenden Gruppe (1) überlagert werden soll, und dass sie ein bewegliches Paneel trägt,
wobei der zweite Rahmen (21) über gleitende Führungsmittel eines beweglichen verglasten Paneels (22) zwischen einer geschlossenen Position und mindestens einer offenen Position verfügt und wobei das verglaste Paneel in geschlossener Position sich gegen den besagten zweiten Rahmen (21) abstützt, so dass sich dieser zwischen dem besagten ersten Rahmen (13) und dem besagten beweglichen verlasten Paneel (22) befindet.

18. Verfahren zum Herstellen einer Fahrzeugtür, die eine Gruppe (1), welche eine Struktur bildet, und eine verglaste Gruppe (2) umfasst, die baulich miteinander verbunden sind,
**dadurch gekennzeichnet, dass** die besagte, eine Struktur bildende Gruppe (1) einen ersten Rahmen (13) aufweist und dass die besagte verglaste Gruppe (2) einen zweiten Rahmen (21) aufweist und dadurch,
dass es einen Zusammenbauschritt aufweist, bei dem der besagte erste Rahmen (13) dem besagten zweiten Rahmen (21) überlagert wird,
wobei der besagte zweite Rahmen (21) über gleitende Führungsmittel eines beweglichen verglasten Paneels (22) zwischen einer geschlossenen Position und mindestens einer offenen Position verfügt und wobei das verglaste Paneel in geschlossener Position sich gegen den besagten zweiten Rahmen (21) abstützt, so dass sich dieser zwischen dem besagten ersten Rahmen (13) und dem besagten beweglichen verlasten Paneel (22) befindet.

19. Herstellungsverfahren nach Anspruch 18, **dadurch gekennzeichnet, dass** es die folgenden Schritte aufweist:
- Realisierung der besagten, eine Struktur bildende Gruppe (1), die eine Öffnung zum Aufnehmen der besagten verglasten Gruppe (2) aufweist;
- Realisierung der besagten verglasten Gruppe (2), die mindestens eine Verlängerung aufweist, die in die eine Struktur bildende Gruppe (1) eindringen soll;
- Einführen der besagten Verlängerungen in die besagte Öffnung bis zu einem Anschlag;
- Verbindung der besagten ersten und zweiten Rahmen (21).

20. Herstellungsverfahren nach Anspruch 19, **dadurch gekennzeichnet, dass** der besagte Verbindungsschritt mindestens einen der folgenden Schritte aufweist:
- Kleben;
- plastisches Einrasten.

21. Fahrzeug, welches **dadurch gekennzeichnet ist, dass** es mindestens eine Tür nach einem der Ansprüche 1 bis 15 aufweist.
